# EUROPEAN PATENT APPLICATION

(11) **EP 4 186 953 A1**
(43) Date of publication of application: **31.05.2023**
(21) Application number: 21845338.9
(22) Date of filing: 28.06.2021
(51) Int. Cl.: C09D 183/05, C09D 183/07, C09D 7/61

(54) **ANTI-SULFURIZATION COATING MATERIAL, CURED PRODUCT THEREOF, AND ELECTRONIC DEVICE**

(30) Priority: 22.07.2020 JP 2020125117
(71) Applicant: SHIN-ETSU CHEMICAL CO., LTD., Tokyo 1000005 (JP)
(72) Inventor: KOBAYASHI Yukito, Annaka-shi, Gunma 379-0224 (JP); OZAI Toshiyuki, Annaka-shi, Gunma 379-0224 (JP)
(74) Representative: Sonnenhauser, Thomas Martin
(86) International application number: PCT/JP2021/024268
(87) International publication number: WO 2022/019056

(57) **Abstract**

The present invention is an anti-sulfuration coating material, including: (A) a linear organopolysiloxane represented by the following general formula (1); (B) an organohydrogenpolysiloxane having two or more hydrogen atoms bonded to silicon atoms within one molecule; (C) one or more substances selected from crystalline silica and talc; (D) a linear organopolysiloxane having one or more phenyl groups within one molecule and having neither an alkenyl group nor a hydrogen atom bonded to a silicon atom; (E) a hydrosilylation catalyst containing platinum group metal; and (F) cerium oxide, wherein the anti-sulfuration coating material is free from metal powder or metal plating powder. This makes it possible to provide an anti-sulfuration coating material made of an addition curing silicone composition, which does not contain metal powder and metal plating powder and is excellent in durability in a high-temperature environment, and can provide a cured material having sulfuration resistance.

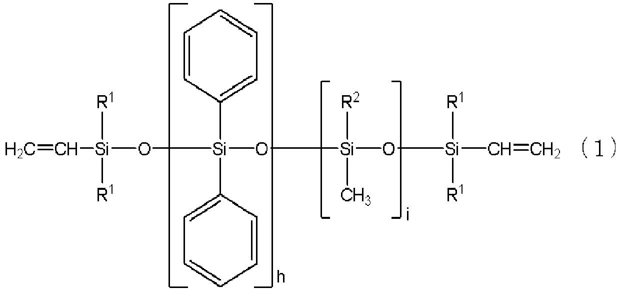

## Description

### TECHNICAL FIELD

The present invention relates to an anti-sulfuration coating material, a cured material of the anti-sulfuration coating material, and an electronic device sealed by the cured material.

### BACKGROUND ART

Addition curing silicone rubber compositions containing metal powder or metal plating powder of copper, silver, or the like, have hitherto been used as sealing materials and adhesives for preventing corrosion of electronic components.

In order to improve the dispersibility of the metal powder, a method of incorporating a metal powder or a metal plating powder treated with a fatty acid or a fatty acid derivative such as a fatty acid ester has been known (Patent Documents 1 and 2). However, the method has problems in that the catalytic ability of the curing catalyst is reduced due to the presence of a fatty acid serving as a catalyst poison, or that an excessive fatty acid reacts with organohydrogenpolysiloxane serving as a crosslinking agent of an addition curing silicone rubber composition, thereby causing curing failure or foaming due to a dehydrogenation reaction.

In addition, due to an increase in heat generation with an increase in output of electronic components, the metal powder facilitates cracking of silicone rubber in a high-temperature environment, thereby causing a decrease in rubber strength; as a result, the durability of the silicone rubber becomes insufficient.

### CITATION LIST

### PATENT LITERATURE

Patent Document 1: JP 2003-096301 A
Patent Document 2: JP 2011-201934 A

### SUMMARY OF INVENTION

### TECHNICAL PROBLEM

As described above, previously-known addition curing silicone compositions using metal powder or metal plating powder are incapable of maintaining durability in a high-temperature environment.

The present invention has been made in view of the above circumstances, and an object of the present invention is to provide an anti-sulfuration coating material made of an addition curing silicone composition, which does not contain metal powder and metal plating powder and is excellent in durability in a high-temperature environment, and can provide a cured material having sulfuration resistance.

### SOLUTION TO PROBLEM

In order to solve the above problem, the present invention provides an anti-sulfuration coating material, comprising:
(A) a linear organopolysiloxane represented by the following general formula (1); 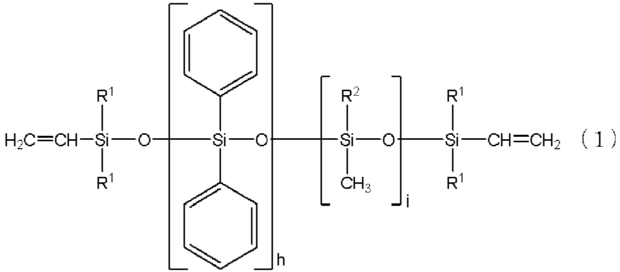 wherein each R¹ is identical to or different from one another, and represents a substituted or unsubstituted monovalent hydrocarbon group, which does not contain an alkenyl group; R² represents a methyl group or a phenyl group; "h" is a number of 0 to 50; and "i" is a number of 0 to 100, provided that when "h" is 0, R² is a phenyl group, and "i" is a number of 1 to 100; a siloxane unit in the parentheses with "h" and a siloxane unit in the parentheses with "i" are optionally arranged randomly, in blocks, or alternately with each other,
(B) an organohydrogenpolysiloxane having two or more hydrogen atoms bonded to silicon atoms within one molecule;
(C) one or more substances selected from crystalline silica and talc;
(D) a linear organopolysiloxane having one or more phenyl groups within one molecule and having neither an alkenyl group nor a hydrogen atom bonded to a silicon atom;
(E) a hydrosilylation catalyst containing platinum group metal;
   and
(F) cerium oxide,
   wherein the anti-sulfuration coating material is free from metal powder or metal plating powder.

Such an anti-sulfuration coating material is excellent in heat resistance, and can provide a cured material having sulfuration resistance.

Further, the R¹ is preferably a phenyl group or a methyl group.

Such an anti-sulfuration coating material can improve heat resistance and sulfuration resistance.

The number of the phenyl groups is preferably 20% or more based on the total number of the organic groups bonded to silicon atoms in the component (A).

Such an anti-sulfuration coating material can ensure improvement in sulfuration resistance.

The present invention further provides a silicone cured material, which is a cured material obtained by curing the anti-sulfuration coating material described above.

Such a silicone cured material is excellent in heat resistance and sulfuration resistance; therefore, the cured material can be used as a protective coating material or a sealing material for electronic devices, in particular, semiconductor devices for optical applications.

The present invention further provides an electronic device sealed by the silicone cured material described above.

The silicone cured material of the present invention is excellent in heat resistance and sulfuration resistance. Therefore, an electronic device sealed by such a silicone cured material has high reliability.

### ADVANTAGEOUS EFFECTS OF INVENTION

As described above, the anti-sulfuration coating material of the present invention, which does not contain metal powder and metal plating powder, is excellent in durability in a high-temperature environment, and can provide a cured material excellent in sulfuration resistance. Therefore, a cured material obtained from such an anti-sulfuration coating material can be suitably used for an optical element sealing material, and similar applications for the protection of an electronic device.

### DESCRIPTION OF EMBODIMENTS

As described above, there has been a demand for the development of a coating material that does not contain metal powder or metal plating powder and has excellent durability in a high-temperature environment and excellent sulfuration resistance, as well as the development of a highly reliable electronic device sealed by the cured material of the coating material.

As a result of intensive studies to achieve the above object, the present inventors have found that the above problems can be solved by an anti-sulfuration coating material, which contains components (A), (B), (C), (D), (E) and (F) described below, and that does not contain a metal powder or metal plating powder. With this finding, the inventors have completed the present invention.

Specifically, the present invention is an anti-sulfuration coating material, comprising
(A) a linear organopolysiloxane represented by the following general formula (1); 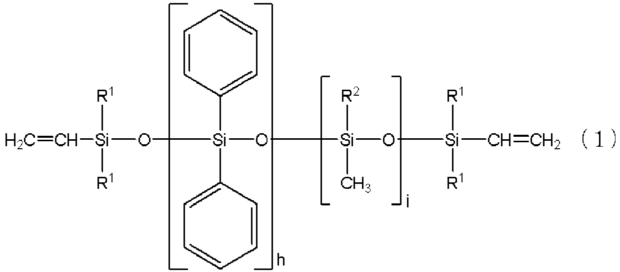 wherein each R¹ is identical to or different from one another, and represents a substituted or unsubstituted monovalent hydrocarbon group, which does not contain an alkenyl group; R² represents a methyl group or a phenyl group; "h" is a number of 0 to 50; and "i" is a number of 0 to 100, provided that when "h" is 0, R² is a phenyl group, and "i" is a number of 1 to 100; a siloxane unit in the parentheses with "h" and a siloxane unit in the parentheses with "i" are optionally arranged randomly, in blocks, or alternately with each other,
(B) an organohydrogenpolysiloxane having two or more hydrogen atoms bonded to silicon atoms within one molecule;
(C) one or more substances selected from crystalline silica and talc;
(D) a linear organopolysiloxane having one or more phenyl groups within one molecule and having neither an alkenyl group nor a hydrogen atom bonded to a silicon atom;
(E) a hydrosilylation catalyst containing platinum group metal;
   and
(F) cerium oxide,
   wherein the anti-sulfuration coating material is free from metal powder or metal plating powder.

The present invention is described below in detail; however, the present invention is not limited to the examples described below.

### [Anti-sulfuration Coating Material]

The anti-sulfuration coating material of the present invention is made of an addition curing silicone composition containing the following components (A), (B), (C), (D), (E) and (F). Hereinbelow, each component is described in detail.

### <Component (A)>

The component (A) of the anti-sulfuration coating material of the present invention is a linear organopolysiloxane represented by the following general formula (1). 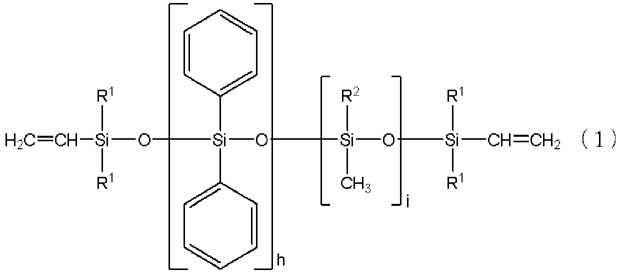 (wherein each R¹ is identical to or different from one another, and represents a substituted or unsubstituted monovalent hydrocarbon group, which does not contain an alkenyl group; R² represents a methyl group or a phenyl group; "h" is a number of 0 to 50; and "i" is a number of 0 to 100, provided that when "h" is 0, R² is a phenyl group, and "i" is a number of 1 to 100; a siloxane unit in the parentheses with "h" and a siloxane unit in the parentheses with "i" are optionally arranged randomly, in blocks, or alternately with each other)

R¹ is not particularly limited insofar as it does not contain an alkenyl group, and examples thereof include unsubstituted or halogen-substituted monovalent hydrocarbon groups having generally 1 to 12, preferably 1 to 10, further preferably 1 to 8 carbon atoms, for example, alkyl groups such as a methyl group, an ethyl group, a propyl group, a butyl group, a pentyl group, a hexyl group, and a heptyl group; cycloalkyl groups such as a cyclopentyl group and a cyclohexyl group; aryl groups such as a phenyl group, a tolyl group, a xylyl group, and a naphthyl group; aralkyl groups such as a benzyl group and a phenethyl group; halogenated alkyl groups such as a chloromethyl group, a 3-chloropropyl group, and a 3,3,3-trifluoropropyl group, and the like. Among them, a methyl group and a phenyl group are preferable.

In the general formula (1), "h" is an integer of 0 to 50, "i" is an integer of 0 to 100; when "h" is 0, R² is a phenyl group and "i" is 1 to 100. If "h" and "i" fall outside of the above ranges, high hardness and sulfuration resistance cannot be imparted to the cured material of the silicone composition of the present invention.

The number of the phenyl groups is preferably 20% or more based on the total number of the organic groups bonded to silicon atoms in the component (A), and, although there are no particular restrictions on the upper limit, 80% or less is sufficient. Within this range, sufficient corrosion resistance can be ensured.

The viscosity of the component (A) at 25°C is preferably 10 to 100,000 mPa·s, more preferably in a range of 10 to 10,000 mPa·s. When the viscosity is within the above range, there is no possibility that the viscosity of the composition becomes significantly high to thereby cause a problem of poor workability. Unless otherwise specified below, the viscosity is a value measured at 25°C using a rotational viscometer. The rotational viscometer is not particularly limited; for example, a BL-type, a BH-type, a BS-type, or a cone and plate viscometer can be used.

Specific examples of the component (A) include diphenylpolysiloxane with both terminals blocked with a methylphenylvinylsiloxy group, diphenylpolysiloxane with both terminals blocked with a diphenylvinylsiloxy group, diphenylsiloxane-methylphenylsiloxane copolymers with both terminals blocked with a diphenylvinylsiloxy group, diphenylpolysiloxane with both terminals blocked with a dimethylvinylsiloxy group, methylphenylpolysiloxane with both terminals blocked with a dimethylvinylsiloxy group, and the like.

Only one kind, or a combination of two or more kinds of the component (A) may be used.

### <Component (B)>

The component (B) is an organohydrogenpolysiloxane having two or more hydrogen atoms bonded to silicon atoms within one molecule. The component (B) causes a hydrosilylation reaction with the component (A) and acts as a crosslinking agent.

There are no particular restrictions on the molecular structure of the component (B), and it is possible to use, for example, various types of traditionally-produced organohydrogenpolysiloxanes having a linear, cyclic, branched, or a three dimensional network structure. Further, the component (B) may be in the form of a liquid, wax or a solid at 25°C.

The component (B) preferably has at least one aryl group or arylene group from the viewpoint of compatibility with the component (A). Examples of aryl group are the same as those exemplified for the component (A), and examples of arylene group include a phenylene group, a naphthylene group, and the like.

The organohydrogenpolysiloxane of the component (B) has at least 2, preferably 3 to 300, and particularly preferably 3 to 100 hydrogen atoms bonded to silicon atoms (i.e., hydrosilyl groups (SiH groups)) within one molecule. When the organohydrogenpolysiloxane has a linear structure, these SiH groups may be located at only one of, or both of the molecular chain terminal and in the middle of the molecular chain (non-terminal of the molecular chain).

The number of silicon atoms per molecule (degree of polymerization) of the organohydrogenpolysiloxane of the component (B) is preferably 2 to 300, more preferably 3 to 200, and even more preferably 4 to 150.

For example, the organohydrogenpolysiloxane represented by the following average composition formula (2) may be used as the component (B).

R¹ⱼHₖSiO_{(4-j-k)/2} (2)

(wherein R¹ is as defined above, and j and k are each preferably a positive number satisfying 0.7≦j≦2.1, 0.001≦k≦1.0, and 0.8≦j+k≦3.0, more preferably a positive number satisfying 1.0≦j≦2.0, 0.01≦k≦1.0, and 1.55≦j+k≦2.5)

Specific examples of the component (B) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, tris(hydrogenmethylphenylsiloxy)methylsilane, tris(hydrogenmethylphenylsiloxy)phenylsilane, methylhydrogencyclopolysiloxane, methylhydrogensiloxane-dimethylsiloxane cyclic copolymers, methylhydrogenpolysiloxane with both terminals blocked with a trimethylsiloxy group, dimethylsiloxane-methylhydrogensiloxane copolymers with both terminals blocked with a trimethylsiloxy group, methylhydrogensiloxane-diphenylsiloxane copolymers with both terminals blocked with a trimethylsiloxy group, methylhydrogensiloxane-diphenylsiloxane-dimethylsiloxane copolymers with both terminals blocked with a trimethylsiloxy group, methylhydrogensiloxane-methylphenylsiloxane-dimethylsiloxane copolymers with both terminals blocked with a trimethylsiloxy group, dimethylpolysiloxane with both terminals blocked with a dimethylhydrogensiloxy group, diphenylpolysiloxane with both terminals blocked with a dimethylhydrogensiloxy group, methylhydrogenpolysiloxane with both terminals blocked with a dimethylhydrogensiloxy group, dimethylsiloxane-methylhydrogensiloxane copolymers with both terminals blocked with a dimethylhydrogensiloxy group, methylhydrogensiloxane-dimethylsiloxane-diphenylsiloxane copolymers with both terminals blocked with a dimethylhydrogensiloxy group, methylhydrogensiloxane-dimethylsiloxane-methylphenylsiloxane copolymers with both terminals blocked with a dimethylhydrogensiloxy group, dimethylpolysiloxane with both terminals blocked with a hydrogenmethylphenylsiloxy group, diphenylpolysiloxane with both terminals blocked with a dimethylhydrogensiloxy group, methylhydrogenpolysiloxane with both terminals blocked with a hydrogenmethylphenylsiloxy group, dimethylsiloxane-methylhydrogensiloxane copolymers with both terminals blocked with a hydrogenmethylphenylsiloxy group, methylhydrogensiloxane-dimethylsiloxane-diphenylsiloxane copolymers with both terminals blocked with a hydrogenmethylphenylsiloxy group, methylhydrogensiloxane-dimethylsiloxane-methylphenylsiloxane copolymers with both terminals blocked with a hydrogenmethylphenylsiloxy group, copolymers of (CH₃)₂HSiO_{1/2} unit, (CH₃)₃SiO_{1/2} unit, and SiO_{4/2} unit, copolymers of (CH₃)₂HSiO_{1/2} unit and SiO_{4/2} unit, and copolymers of (CH₃)₂HSiO_{1/2} unit, SiO_{4/2} unit and (C₆H₅)₃SiO_{1/2} unit.

The incorporation amount of the component (B) is such that the number of hydrogen atoms bonded to silicon atoms in the component (B) per alkenyl group bonded to silicon atom in the component (A) is preferably in a range of 0.1 to 5.0, more preferably 0.5 to 3.0, and further preferably in a range of 0.5 to 2.0. Within this range, high strength can be imparted to the silicone cured material, thus making it suitable as a coating material and a sealing material.

Only one kind, or a combination of two or more kinds of the component (B), i.e., organohydrogenpolysiloxane, may be used.

### <Component (C)>

The component (C) is one or more substances selected from crystalline silica and talc, and imparts appropriate mechanical strength and thixotropy to the cured material of the anti-sulfuration coating material of the present invention.

Examples of crystalline silica include Crystalite (registered trademark) series (manufactured by Tatsumori Ltd.), MIN-U-SIL (registered trademark) series (manufactured by US Silica Holdings Inc) and the like, and examples of talc include Microace series (manufactured by Nippon Talc Co., Ltd.), MS-P (manufactured by Nippon Talc Co., Ltd.) and the like. The average particle size (median diameter in volume-based particle size distribution) of the component (C) is preferably 0.1 to 50 pm, and more preferably 1 to 20 pm.

The incorporation amount of the component (C) relative to the total (100 parts by mass) of the component (A) and the component (B) is preferably in a range of 10 to 300 parts by mass, and more preferably in a range of 10 to 100 parts by mass.

Only one kind, or a combination of two or more kinds of the component (C) may be used.

### <Component (D)>

The component (D) is a linear organopolysiloxane having one or more phenyl groups within one molecule and having neither an alkenyl group nor a hydrogen atom bonded to a silicon atom. This component is not involved in the crosslinking of the component (A) and the component (B), and contributes to improving the workability of the anti-sulfuration coating material of the present invention and reducing the stress of the cured material.

The viscosity of the component (D) is preferably in a range of 10 to 3,000 mPa·s, and more preferably in a range of 10 to 1,000 mPa·s. When the viscosity is within this range, occurrence of bleeding and separation from the component (A) and the component (B) can be suppressed, and the anti-sulfuration coating material of the present invention ensures excellent workability.

Specific examples of the component (D) include diphenylpolysiloxane with both terminals blocked with a trimethylsiloxy group, methylphenylpolysiloxanes with both terminals blocked with a trimethylsiloxy group, diphenylsiloxane-methylphenylsiloxane copolymers with both terminals blocked with a trimethylsiloxy group, and the like.

Only one kind, or a combination of two or more kinds of the component (D) may be used.

### <Component (E)>

The hydrosilylation catalyst containing platinum group metal of the component (E) may be any catalyst insofar as it facilitates the addition reaction between the alkenyl group in the component (A) and the hydrogen atoms bonded to silicon atoms in the component (B). Specific examples thereof include platinum group metals such as platinum, palladium and rhodium, and platinum group metal compounds such as chloroplatinic acid, alcohol-modified chloroplatinic acid, coordination compounds of chloroplatinic acid with olefins, vinylsiloxane or acetylene compounds, tetrakis(triphenylphosphine)palladium, and chlorotris(triphenylphosphine)rhodium. Platinum compounds are particularly preferable.

Only one kind, or a combination of two or more kinds of the component (E) may be used.

The incorporation amount of the component (E) may be any effective amount as a catalyst. However, the incorporation amount of the component (E) relative to the total of the component (A) and the component (B) is preferably, as the catalytic metal element, in a range of 1 to 500 ppm, and more preferably in a range of 1 to 100 ppm on a mass basis. Within this range, the reaction rate of the addition reaction becomes appropriate, thereby obtaining a cured material having high strength.

### <Component (F)>

The component (F) is cerium oxide, which improves the heat resistance of the anti-sulfuration coating material of the present invention.

The incorporation amount of the component (F) relative to the total (100 parts by mass) of the component (A) and the component (B) is, from the viewpoint of the hardness and the heat resistance of the cured material to be obtained, preferably 0.1 to 20 parts by mass, and more preferably 1 to 10 parts by mass. The particle size of the component (F) is preferably such that the volume-median size (D50) measured by a laser diffraction and scattering method is in a range of 0.5 to 5.0 pm.

It is preferable that the component (F) is mixed with the component (A) or the component (B) in advance before it is added. As a result, the dispersibility of the component (F) in the anti-sulfuration coating material of the present invention is improved, and separation or the like can be suppressed. In order to further improve the dispersibility, the component (F) and the component (C) may be mixed in advance.

Further, the anti-sulfuration coating material of the present invention does not contain metal powder or metal plating powder. Such a material has excellent durability in a high-temperature environment.

### <Other Components>

### (Reinforcing Component)

In order to improve the mechanical properties of the cured material, the anti-sulfuration coating material of the present invention may contain, as a reinforcing component, a crosslinkable organopolysiloxane other than the component (A). Examples of the crosslinkable organopolysiloxane include the organopolysiloxane represented by the following average formula (3).

(R¹₃SiO_{1/2})ₐ(R³R¹₂SiO_{1/2})_{b}(R³R¹SiO)_{c}(R¹₂SiO)_{d}(R³SiO_{3/2})ₑ(R¹SiO_{3/2} )_{f}(SiO_{4/2})_{g} (3)

(wherein R¹ is as defined above, R³ is an alkenyl group, and a, b, c, d, e, f and g are numbers satisfying a≧0, b≧0, c≧0, d≧0, e≧0, f≧0 and g≧0, respectively, and b+c+e>0 and a+b+c+d+e+f+g=1, provided that when e+f+g=0, c>0)

The reinforcing component is a branched organopolysiloxane having an alkenyl group, or a linear organopolysiloxane having an alkenyl group in a side chain (or both in a side chain and at a molecular terminal), and can increase the crosslinking density.

Examples of R³ include alkenyl groups having 2 to 10 carbon atoms, such as vinyl groups, allyl groups, and ethynyl groups. Among these, alkenyl groups having 2 to 6 carbon atoms are preferable, and vinyl groups are particularly preferable.

Only one kind, or a combination of two or more kinds of the reinforcing component may be used.

### (Adhesiveness Improver)

In order to improve the adhesiveness with respect to resins or the like, the anti-sulfuration coating material of the present invention may contain an adhesiveness improver. As the adhesiveness improver, from the viewpoint of imparting self-adhesiveness to the addition reaction curable composition of the present invention, an organosilicon compound such as silane or siloxane, which contains a functional group imparting adhesiveness, a non-silicone organic compound, or the like is used.

Specific examples of the functional group imparting adhesiveness include alkenyl groups such as a vinyl group and an allyl group bonded to a silicon atom, and a hydrogen atom bonded to a silicon atom; hydrogen atom; epoxy groups bonded to a silicon atom via a carbon atom (e.g., γ-glycidoxypropyl group, β-(3, 4-epoxycyclohexyl) ethyl group, etc.), acryloxy groups (e.g., γ-acryloxypropyl group, etc.), or methacryloxy groups (e.g., γ-methacryloxypropyl group, etc.); alkoxysilyl groups (e.g., alkoxysilyl groups such as trimethoxysilyl groups, triethoxysilyl groups, and methyldimethoxysilyl groups and the like bonded to a silicon atom via an alkylene group which may have one or two ester, urethane, or ether structures), and the like.

Examples of the organosilicon compound containing a functional group imparting adhesiveness include a silane coupling agent, siloxane having an alkoxysilyl group and an organic functional group, compounds obtained by introducing an alkoxysilyl group into an organic compound having a reactive organic group, and the like.

Examples of the non-silicone organic compound include organic acid allyl esters, epoxy group ring-opening catalysts, organic titanium compounds, organic zirconium compounds, organic aluminum compounds, and the like.

### (Reaction Inhibitor)

A reaction inhibitor may be added to the anti-sulfuration coating material of the present invention in order to adjust the curing rate.

Examples of the reaction inhibitor include phosphorus-containing compounds such as triphenylphosphine; nitrogen-containing compounds such as tributylamine, tetramethylethylenediamine, and benzotriazole; sulfur-containing compounds; acetylene compounds; hydroperoxy compounds; maleic acid derivatives; 1-ethynylcyclohexanol, 3,5-dimethyl-1-hexyn-3-ol, ethynylmethyldecylcarbinol, and the like.

Since the degree of the curing inhibition effect by the reaction inhibitor varies depending on the chemical structure of the reaction inhibitor, it is desirable to adjust the incorporation amount for each of the reaction inhibitor to be used to an optimum amount. The incorporation amount relative to the total (100 parts by mass) of the component (A) and the component (B) is 0.001 to 5 parts by mass. When the incorporation amount is 0.001 parts by mass or more, it is possible to sufficiently ensure long-term storage stability of the composition at room temperature. When the incorporation amount is 5 parts by mass or less, there is no possibility of inhibition of the curing of the composition.

### (Coupling Agent)

A coupling agent may be added to the anti-sulfuration coating material of the present invention.

Examples of the coupling agent include triallylisocyanurate, a silane coupling agent represented by the following structural formula, and the like.

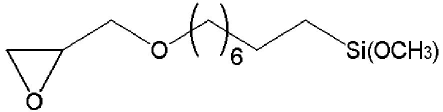

### (Fumed Silica)

A fumed silica may be added to the anti-sulfuration coating material of the present invention.

The fumed silica preferably has a specific surface area (BET method) of 50 m²/g or more, more preferably 50 to 400 m²/g, and particularly preferably 100 to 300 m²/g, from the viewpoint of imparting thixotropy to the anti-sulfuration coating material of the present invention and imparting reinforcing properties to the cured material.

The fumed silica is preferably treated with an organosilicon compound, for example, methylchlorosilane such as trimethylchlorosilane, dimethyldichlorosilane, and methyltrichlorosilane; dimethylpolysiloxane, hexaorganodisilazane such as hexamethyldisilazane, divinyltetramethyldisilazane, and dimethyltetravinyldisilazane, and the like.

Examples of the fumed silica include Reolosil DM30 (manufactured by Tokuyama Corporation), Aerosil NSX-200 (manufactured by Nippon Aerosil Co., Ltd.), Musil 120A (manufactured by Shin-Etsu Chemical Co., Ltd.) and the like.

When used, the incorporation amount of the fumed silica relative to the total (100 parts by mass) of the component (A) and the component (B) is preferably in a range of 0.1 to 20 parts by mass, and more preferably in a range of 1 to 10 parts by mass. Within this range, sedimentation of the fumed silica in the coating material can be suppressed, and sufficient reinforcing properties can be obtained. In addition, there is no possibility of imparting thixotropy more than necessary to cause a decrease in workability.

### [Silicone Cured Material]

The present invention further provides a cured material (silicone cured material) obtained by curing the anti-sulfuration coating material described above.

### [Electronic Device]

The present invention further provides an electronic device sealed by the silicone cured material described above.

As the curing method and conditions for the anti-sulfuration coating material of the present invention, known curing methods and conditions can be employed. For example, the curing can be performed at 100 to 180°C for 10 minutes to 5 hours.

### EXAMPLES

The present invention is specifically described below with reference to Synthesis Examples, Examples, and Comparative Examples. However, the present invention is not limited to these Examples. Note that the molecular weight is a number average molecular weight in terms of standard polystyrene in gel permeation chromatography (GPC), and the viscosity is a value at 25°C measured using a rotational viscometer. The average particle size is a median diameter in volume-based particle size distribution according to the laser diffraction and scattering method.

### [Synthesis Example 1]

A paste (F) was obtained by mixing 29 parts by mass of cerium oxide powder (CeO₂, SN-2, manufactured by Nikki Corporation, average particle size = 2.7 um) and 71 parts by mass of a linear organopolysiloxane represented by (CH₂=CH(CH₃)₂SiO_{1/2})₂((CH₃)₂SiO)₄₂₀ (viscosity = 5,000 mPa·s) with a three roll mill.

### [Synthesis Example 2]

A reaction product of hexachloroplatinic acid and 1,3-divinyltetramethyldisiloxane was diluted with methylphenylorganopolysiloxane having a viscosity of 700 mPa·s and containing 30 mol% of phenyl groups so as to have a platinum content of 1.0 mass%, thereby preparing a platinum catalyst (E-1) .

### [Synthesis Example 3]

A reaction product of hexachloroplatinic acid and 1,3-divinyltetramethyldisiloxane was diluted with dimethylorganopolysiloxane having a viscosity of 600 mPa·s so as to have a platinum content of 1.0 mass%, thereby preparing a platinum catalyst (E-2).

### [Examples 1 to 6, Comparative Examples 1 to 5]

The following components were mixed in the incorporation amounts shown in Table 1, thereby preparing coating materials. The numerical value of each component in Table 1 represents a part by mass.
The [Si-H]/[Si-Vi] value represents the molar ratio of the hydrogen atoms bonded to silicon atoms in the component (B) with respect to all alkenyl groups bonded to silicon atoms in the coating material.
(A-1) linear organopolysiloxane having a viscosity of 4,000 mPa·s represented by

   (CH₂=CH(CH₃)₂SiO_{1/2})₂((C₆H₅)₂SiO)₃₀((CH₃)₂SiO)₆₈;
(A-2) linear organopolysiloxane having a viscosity of 2,000 mPa·s represented by

   (CH₂=CH(CH₃)(C₆H₅)SiO_{1/2})₂((C₆H₅)₂SiO)₃;
(A-3) linear organopolysiloxane having a viscosity of 1,000 mPa·s represented by (CH₂=CH(CH₃)₂)((CH₃)₂SiO)₂₀₅;
(B-1) organohydrogenpolysiloxane represented by

   ((CH₃)₃SiO_{1/2})₂(H(CH₃)SiO)₈;
(B-2) organohydrogenpolysiloxane represented by the following formula; 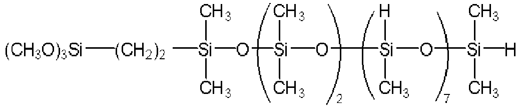 wherein the arrangement order of the siloxane units in the parentheses may vary,
(B-3) organohydrogenpolysiloxane represented by

   (H (CH₃)₂SiO_{1/2})₂((C₆H₅)₂SiO);
(B-4) organohydrogenpolysiloxane represented by

   (H (CH₃)₂SiO_{1/2})₂(H(CH₃)SiO)₂((C₆H₅)₂SiO)₂;
(B-5) organohydrogenpolysiloxane represented by

   (H(CH₃)₂SiO_{1/2})₂(H(CH₃)SiO)₂((CH₃)₂SiO)₁₄;
(B-6) organohydrogenpolysiloxane represented by

   (CH₃)₃SiO_{1/2})₂(H(CH₃)SiO)₆((CH₃)₂SiO)₁₇;
(C-1): crystalline silica KAIDA SP5 (manufactured by CBC Co., Ltd., average particle size = 5 um)
(C-2): crystalline silica Crystalite VX-S (manufactured by Tatsumori Ltd., average particle size = 4 um)
(C-3): crystalline silica MIN-U-SIL 15 (manufactured by US Silica Holdings Inc, average particle size = 5 um)
(C-4): talc powder, MS-P (manufactured by Nippon Talc Co., Ltd., average particle size = 15 um)
(C-5): calcium carbonate MC coat S20 (manufactured by Maruo Calcium Co., Ltd.)
(C-6): copper powder FCC-SP-99 (manufactured by Fukuda Metal Foil and Powder Co., Ltd., treated with stearic acid)
(D) organopolysiloxane having a viscosity of 400 mPa·s represented by ((CH₃)₃SiO_{1/2})₂((CH₃)₂SiO)₉((C₆H₅)₂SiO)₄;
(E-1): platinum catalyst obtained in Synthesis Example 2 (E-2): platinum catalyst obtained in Synthesis Example 3
(F): a paste containing cerium oxide obtained in Synthesis Example 1
(G) organopolysiloxane represented by

   ((CH₃)₃SiO_{1/2})₂((CH=CH₂)(CH₃)₂SiO)₆((CH₃)₂SiO)₃((C₆H₅)₂SiO)₉;
(H): 1-ethynylcyclohexanol
(I-1): triallylisocyanurate
(I-2): a silane coupling agent represented by the following structural formula 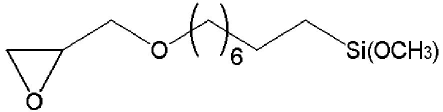
(J) fumed silica Musil 120A (manufactured by Shin-Etsu Chemical Co., Ltd., specific surface area by BET adsorption method = 200 m²/g)

The coating materials obtained in Examples 1 to 6 and Comparative Examples 1 to 5 were evaluated as described below; the results are shown in Table 2.

### (Tensile Strength)

Each coating material was poured into a mold with a thickness of 2 mm, and then cured at 150°C for 1 hour, thereby obtaining a sheet-shaped cured material. The tensile strength of a dumbbell specimen of the cured material was measured in accordance with JIS K6251:2017.

### (Hardness)

Six sheets of the cured material were stacked, and the hardness of the 12 mm-thick layer was measured using an Asker-C durometer.

When the hardness is in a range of 5 to 50 when measured by an Asker-C durometer, the cured material has excellent stress relaxation properties and is capable of imparting high durability to an electronic device coated or sealed by the cured material.

### (Hardness Change after Heat Resistance Test)

The cured material was further exposed to an environment of 200°C for 500 hours and then cooled to 25°C; thereafter, the hardness after the heat resistance test was measured using an Asker-C durometer in the same manner as described above. The smaller the change in hardness, the material has more excellent durability.

### (Mass Reduction Rate)

The mass of the cured material was measured before and after the exposure to an environment of 200°C for 500 hours, thereby calculating the weight reduction rate. The mass reduction rate is preferably less than 5%. The smaller the mass reduction rate, the material has more excellent durability.

### (Sulfuration Resistance)

Silicone gel KE-1057 (manufactured by Shin-Etsu Chemical Co., Ltd.) was poured into a 100g wide-mouthed glass bottle in which a silver substrate was placed on the inner bottom, followed by curing under the conditions of 150°C and 30 minutes. Next, 10g of each coating material was poured and cured under the conditions of 150°C and 1 hour, and then a container containing 0.1g of sulfur was placed on the cured material. The glass bottle was sealed and then allowed to stand at 70°C for 10 days, and the discoloration of the silver substrate was visually observed. Evaluation was performed by rating "poor" when the silver substrate was discolored to black and rating "good" when no discoloration was observed.

**[Table 1]**

| | Ex.1 | Ex.2 | Ex.3 | Ex 4 | Ex. 5 | Ex. 6 | Comp. Ex. 1 | Comp. Ex . 2 | Comp. Ex. 3 | Comp. Ex. 4 | Comp. Ex.5 |
|---|---|---|---|---|---|---|---|---|---|---|---|
| A-1 | 64 | 64 | 64 | 64 | 69 | 69 | 64 | 64 | - | - | - |
| A-2 | 15 | 15 | 15 | 15 | 10 | 10 | 15 | 15 | - | - | - |
| A-3 | - | - | - | - | - | - | - | - | 100 | 100 | 100 |
| B-1 | 2.59 | 2.59 | 2.59 | 2.59 | - | - | 2.59 | 2.59 | 2 | 2 | 2 |
| B-2 | 3 | 3 | 3 | 3 | - | - | 3 | 3 | - | - | - |
| B-3 | - | - | - | - | 3 | 1.5 | - | - | - | - | - |
| B-4 | - | - | - | - | 5.7 | 5.6 | - | - | - | - | - |
| B-5 | - | - | - | - | - | 3 | - | - | - | - | - |
| B-6 | - | - | - | - | - | - | - | - | 2 | 2 | 2 |
| C-1 | 80 | - | - | - | 80 | 80 | - | - | 80 | - | 80 |
| C-2 | - | 80 | - | - | - | - | - | - | - | - | - |
| C-3 | - | - | 80 | - | - | - | - | - | - | - | - |
| C-4 | - | - | - | 80 | - | - | - | - | - | - | - |
| C-5 | - | - | - | - | - | - | - | 80 | - | 80 | - |
| C-6 | - | - | - | - | - | - | - | - | - | 10 | 10 |
| D | 20 | 20 | 20 | 20 | 20 | 20 | 20 | 20 | - | - | - |
| E-1 | 0.2 | 0.2 | 0.2 | 0.2 | 0.2 | 0.2 | 0.2 | 0.2 | - | - | - |
| E-2 | - | - | - | - | - | - | - | - | 0.2 | 0.2 | 0.2 |
| F | 8 | 8 | 8 | 8 | 8 | 8 | 8 | 8 | 8 | 8 | 8 |
| G | 2 | 2 | 2 | 2 | 2 | 2 | 2 | 2 | - | - | - |
| H | 0.2 | 0.2 | 0.2 | 0.2 | 0.2 | 0.2 | 0.2 | 0.2 | 0.2 | 0.2 | 0.2 |
| I-1 | 0.5 | 0.5 | 0.5 | 0.5 | 0.5 | 0.5 | 0.5 | 0.5 | 0.5 | 0.5 | 0.5 |
| 1-2 | 1 | 1 | 1 | 1 | 1 | 1 | 1 | 1 | 1 | 1 | 1 |
| J | 2 | 2 | 2 | 2 | 2 | 2 | 2 | 2 | 2 | 2 | 2 |
| [Si-H] /[Si-Vi] | 1.0 | 1.0 | 1.0 | 1.0 | 0.9 | 0.9 | 1.0 | 1.0 | 1.3 | 1.3 | 1.3 |

**[Table 2]**

| | Ex. 1 | Ex. 2 | Ex. 3 | Ex. 4 | Ex. 5 | Ex. 6 | Comp. Ex.1 | Comp. Ex.2 | Comp. Ex.3 | Comp. Ex.4 | Comp. Ex. 5 |
|---|---|---|---|---|---|---|---|---|---|---|---|
| Tensile Strength (MPa) | 0.7 | 1 | 0.8 | 0.8 | 0.7 | 0.7 | 0.1 | 0.8 | 1.3 | 1.1 | 1.3 |
| Hardness | 33 | 38 | 37 | 43 | 20 | 22 | 32 | 41 | 30 | 32 | 35 |
| Hardness (After Heat Resistance Test) | 38 | 44 | 45 | 51 | 28 | 28 | 34 | 80 | 38 | 42 | 51 |
| Mass Reduction Rate (%) | 2.9 | 2.4 | 1.9 | 2.0 | 2.3 | 2.1 | 2.5 | 2.8 | 1.9 | 6.2 | 7.6 |
| Sulfuration Resistance | good | good | good | good | good | good | good | good | poor | good | good |

As shown in Table 2, the cured materials made of the anti-sulfuration coating materials of Examples 1 to 6 had small changes in hardness and mass before and after the heat resistance test at 200°C for 500 hours, and were excellent in sulfuration resistance.

On the other hand, in Comparative Example 1 in which a coating material free from crystalline silica or talc was used, the tensile strength of the cured material was significantly lower; further, in Comparative Example 2 in which a coating material containing calcium carbonate instead of crystalline silica or talc was used, the change in hardness after the heat resistance test was large, and the durability was poor.

Further, although Comparative Example 3 in which a dimethylpolysiloxane coating material was used as the component (A) ensured excellent heat resistance, the sulfuration resistance was poor. On the other hand, in Comparative Examples 4 and 5 in which copper powder was added to a dimethylpolysiloxane coating material, although the sulfuration resistance was ensured, the mass reduction rate during the heat resistance test increased due to cracking.

It was thus demonstrated that the anti-sulfuration coating material of the present invention, which does not contain metal powder, is excellent in durability in a high-temperature environment, and can provide a cured material having sulfuration resistance, and therefore is suitable for use in protection of electronic devices.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. An anti-sulfuration coating material, comprising:
(A) a linear organopolysiloxane represented by the following general formula (1); 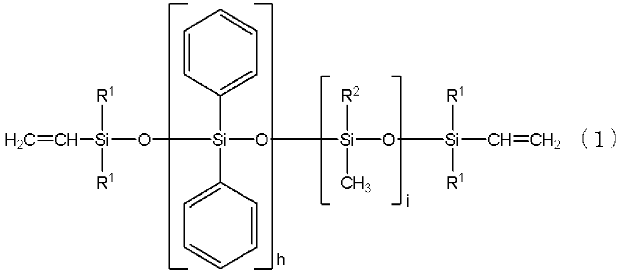 wherein each R¹ is identical to or different from one another, and represents a substituted or unsubstituted monovalent hydrocarbon group, which does not contain an alkenyl group; R² represents a methyl group or a phenyl group; "h" is a number of 0 to 50; and "i" is a number of 0 to 100, provided that when "h" is 0, R² is a phenyl group and "i" is a number of 1 to 100; a siloxane unit in parentheses with "h" and a siloxane unit in parentheses with "i" are optionally arranged randomly, in blocks, or alternately with each other;
(B) an organohydrogenpolysiloxane having two or more hydrogen atoms bonded to silicon atoms within one molecule;
(C) one or more substances selected from crystalline silica and talc;
(D) a linear organopolysiloxane having one or more phenyl groups within one molecule and having neither an alkenyl group nor a hydrogen atom bonded to a silicon atom;
(E) a hydrosilylation catalyst containing platinum group metal;
and
(F) cerium oxide,
wherein the anti-sulfuration coating material is free from metal powder or metal plating powder.

2. The anti-sulfuration coating material according to claim 1, wherein R¹ is a phenyl group or a methyl group.

3. The anti-sulfuration coating material according to claim 1 or 2, wherein the number of phenyl groups is 20% or more based on the total number of organic groups bonded to silicon atoms in the component (A).

4. A silicone cured material, which is a cured material of the anti-sulfuration coating material according to any one of claims 1 to 3.

5. An electronic device sealed by the silicone cured material according to claim 4.
